(19) **Europäisches Patentamt**
**European Patent Office**
**Office européen des brevets**

(11) **EP 2 133 948 A1**

(12) **EUROPEAN PATENT APPLICATION**
published in accordance with Art. 153(4) EPC

(43) Date of publication:
**16.12.2009 Bulletin 2009/51**

(51) Int Cl.:
*H01M 8/02* (2006.01)     *H01B 1/06* (2006.01)
*H01B 13/00* (2006.01)     *H01M 8/10* (2006.01)

(21) Application number: **08739027.4**

(22) Date of filing: **27.03.2008**

(86) International application number:
**PCT/JP2008/055898**

(87) International publication number:
**WO 2008/120675 (09.10.2008 Gazette 2008/41)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **30.03.2007 JP 2007090833**
**19.10.2007 JP 2007272576**

(71) Applicant: **Tokuyama Corporation**
**Shunan-shi, Yamaguchi-ken 745-8648 (JP)**

(72) Inventors:
• **MATSUOKA, Hitoshi**
**Shunan-shi**
**Yamaguchi 745-8648 (JP)**

• **FUKUTA, Kenji**
**Shunan-shi**
**Yamaguchi 745-8648 (JP)**
• **SAKATA, Kanji**
**Shunan-shi**
**Yamaguchi 745-8648 (JP)**

(74) Representative: **Gulde Hengelhaupt Ziebig & Schneider**
**Patentanwälte - Rechtsanwälte**
**Wallstraße 58/59**
**10179 Berlin (DE)**

(54) **DIAPHRAGM FOR DIRECT LIQUID FUEL CELL AND METHOD FOR PRODUCING THE SAME**

(57)     The present invention discloses a membrane for direct liquid fuel cell comprising a porous film and a crosslinked hydrocarbon-based anion exchange resin filled in the pores of the porous film, in which the amino exchange resin has a quaternary ammonium group as an anion exchange group, wherein the membrane is **characterized by** having a membrane thickness of 5 to 60 $\mu$m, a membrane resistance as measured in a wet condition of 40°C by an alternating impedance method, of 0.005 to 1.2 $\Omega\cdot$cm$^2$, and a methanol permeability at 25°C of 30 to 800 g$\cdot$m$^{-2}\cdot$hr$^{-1}$.

**EP 2 133 948 A1**

## Description

### Technical Field

The present invention relates to a membrane for direct liquid fuel cell and a method for producing the membrane. More particularly, the present invention relates to a membrane for direct liquid fuel cell, made of an anion exchange membrane and a method for producing the membrane.

### Background Art

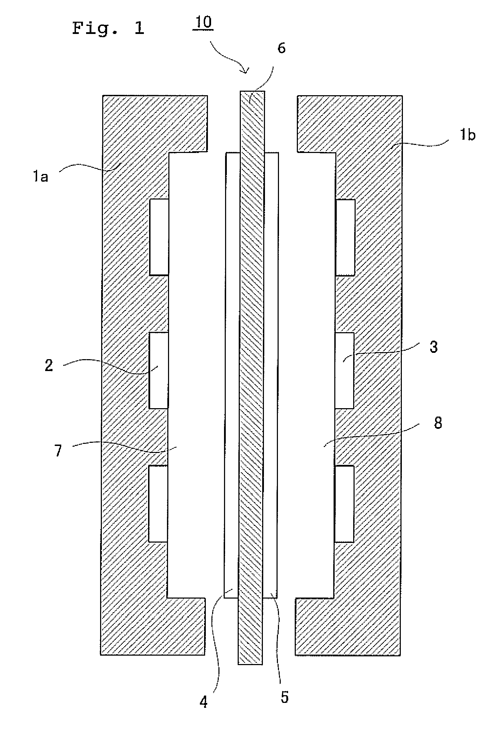

Solid polymer fuel cell uses, as the membrane, a solid polymer electrolyte membrane made of, for example, an ion exchange resin and has a feature of operating at relatively low temperatures. As shown in Fig. 1, the solid polymer fuel cell has a basic structure in which the space inside cell partition walls 1a and 1b is separated by a assembly 10. The assembly 10 is formed by bonding a fuel diffusion electrode 4 to one side of a solid polymer electrolyte membrane 6 and an oxidant gas diffusion electrode 5 to other side of the solid polymer electrolyte membrane 6. By separating the space inside the cell partition walls 1a and 1b by the assembly 10, a fuel chamber 7 and an oxidant chamber 8 are formed inside the cell partition walls. The fuel chamber 7 communicates with outside the cell via fuel passages 2 formed in the cell partition wall la. The oxidant chamber 8 comminutes with outside the cell via oxidant gas passages 3 formed in the cell partition wall 1b.

In the solid polymer fuel cell having the above basic structure, hydrogen gas or a fuel (e.g. methanol) is fed into the fuel chamber 7 via the fuel passages 2, and oxygen or an oxygen-containing gas (e.g. air) (both acting as an oxidant) is fed into the oxidant chamber 8 via the oxidant gas passages 3. In this state, when an external circuit (not shown) is connected to the two diffusion electrodes 4 and 5, the fuel cell supplies electric energy to the external circuit based on the following reaction mechanism.

When a cation exchange type electrolyte membrane is used as the solid polymer electrolyte membrane 6, the catalyst contained in the fuel diffusion electrode 4 reacts with a fuel in the electrode, generating protons. The protons (hydrogen ions) conducts through the solid polymer electrolyte membrane 6 and migrates toward the oxidant chamber 8. The protons which have arrived at the oxidant chamber 8, react with the oxygen contained in the oxidant gas owing to the action of the catalyst contained in the oxidant gas diffusion electrode 5, generating water. Meanwhile, the electrons generated together with the protons in the fuel diffusion electrode 4 pass through the external circuit and sent to the oxidant gas diffusion electrode 5. The external circuit utilizes the energy generated in the above reaction mechanism, as an electric energy.

In the solid polymer liquid fuel cell using, as the solid polymer electrolyte membrane, a cation exchange type electrolyte membrane, a perfluorocarbonsulfonic acid resin membrane is used most generally as the cation exchange type electrolyte membrane. However, in the cation exchange type fuel cell using, as the electrolyte membrane, a perfluorocarbonsulfonic acid resin membrane, the following problems are pointed out.

(i) Since the reaction is conducted in a strongly acidic atmosphere, only a noble metal catalyst resistant to such an acidic atmosphere can be used as the catalyst. Further, the perfluorocarbonsulfonic acid resin membrane is expensive, which has a limit in the reduction in production cost of fuel cell.
(ii) Since the water retention of the perfluorocarbonsulfonic acid resin membrane is insufficient, water make-up is needed in the operation of fuel cell.
(iii) Since the perfluorocarbonsulfonic acid resin membrane has low in physical strength, it is difficult to produce a fuel cell of small thickness and accordingly low electric resistance.
(iv) The perfluorocarbonsulfonic acid resin membrane has high methanol permeability. Therefore, during the operation of a fuel cell using methanol as the fuel, the methanol which has arrived at the oxidant gas diffusion electrode reacts with oxygen or air on the electrode surface, inviting an increase in overvoltage; as a result, the output voltage of the fuel cell decreases.

In order to solve the above problems, particularly the problem (i), it has been investigated to use a hydrocarbon-based anion exchange membrane in place of the perfluorocarbonsulfonic acid resin membrane, and various proposals have been made (Patent Literatures 1 to 3).

In the solid polymer fuel cell using an anion exchange membrane, the ion kind migrating through the solid polymer electrolyte membrane 6 differs from the ion kind in the fuel cell using a cation exchange membrane. In the solid polymer fuel cell using an anion exchange membrane, the mechanism of generation of electric energy is as follows. That is, hydrogen or methanol is fed into the fuel chamber side and oxygen and water are fed into the oxidant chamber side, whereby, in the oxidant gas diffusion electrode 5, the catalyst contained in the electrode reacts with the oxygen and the water, generating hydroxide ions ($OH^-$). The hydroxide ions conduct through the solid polymer electrolyte membrane 6 made of the above hydrocarbon-based anion exchange membrane, migrate to the fuel chamber 7, and react with the fed fuel in the fuel diffusion electrode 4, generating water and electrons. The electrons generated in the fuel diffusion electrode 4 conducts to the oxidant gas diffusion electrode 5 via an external circuit. The fuel cell utilizes the energy generated in the above reactions, as an electric energy.

The direct liquid fuel cell using a hydrocarbon-based anion exchange membrane is improved strikingly not only in the above problem (i) but also ordinarily in the problems (ii) and (iii). Further, during the operation, hydroxide ions of large diameter migrate from the oxidant chamber side toward the fuel chamber side and this suppresses the opposite direction movement of methanol; therefore, considerable improvement is expected as well in the problem (iv).

In the membrane for direct liquid fuel cell using a hydrocarbon-based anion exchange membrane, having such advantages, a quaternary ammonium group is highly preferred as the anion exchange group of the membrane because, for example, the group has excellent ion conductivity and the raw material required for producing such an anion exchange membrane is easy to procure (the above-mentioned Patent Literatures 1 to 4).

The hydrocarbon-based anion exchange membrane having a quaternary ammonium group as the anion exchange group (hereinafter, this anion exchange membrane may be referred to simply as "hydrocarbon-based anion exchange membrane of quaternary ammonium type") is ordinarily produced by the following method.

First, a polymerizing composition comprising a polymerizing monomer having a halogenoalkyl group (e.g. chloromethylstyrene) and a crosslinking polymerizing monomer is contacted with a porous membrane to fill the polymerizing composition in the pores of the porous membrane. Then, the polymerizing composition filled in the pores is polymerized to obtain a halogenoalkyl group-containing, crosslinked, hydrocarbon-based resin. Next, the halogenoalkyl group is converted to a quaternary ammonium group and then the counter ion of the quaternary ammonium group is converted into a hydroxide ion.

Patent Literature 1: JP-A-1999-135137
Patent Literature 2: JP-A-1999-273695
Patent Literature 3: JP-A-2000-331693
Patent Literature 4: JP-A-2005-32536

## Disclosure of Invention

### Technical Problem

However, when a direct liquid fuel cell was actually assembled by using, as the membrane, a hydrocarbon-based anion exchange membrane of quaternary ammonium type and was put into operation, the membrane was slightly inferior in density and, contrary to expectation, was not so low in the methanol permeability mentioned in the above item (iv). Consequently, the fuel cell did not give an expected high output.

In order to allow the above anion exchange membrane to have sufficient methanol non-permeability, there is considered an approach of using an anion exchange membrane of very large thickness or an anion exchange membrane of very high crosslinkage degree. When such an approach is employed, the methanol non-permeability of the anion exchange membrane can be improved; however, the resistance of the anion exchange membrane increases strikingly. Consequently, the fuel cell obtained is unable to exhibit a high output.

As described above, with respect to the direct liquid fuel cell using, as the solid polymer electrolyte membrane, a hydrocarbon-based anion exchange membrane of quaternary ammonium type, there is known no hydrocarbon-based anion exchange membrane of quaternary ammonium type which is sufficiently low in methanol permeability and small in membrane resistance and, resultantly, can give a high cell output.

Hydrocarbon-based anion exchange membrane of quaternary ammonium type has been known to date. This ion exchange membrane is produced by impregnating an ion exchange resin into a synthetic fiber-woven fabric and has a membrane thickness of about 200 $\mu$m. It is used mainly in salt (NaCl) production or as a dialysis membrane. For the anion exchange membrane used for such applications, there is required no strictly low electrical resistance such as required for the anion exchange membrane used in fuel cell. Therefore, the above anion exchange membrane, even when produced by using a thick fabric as a porous membrane, can be used satisfactorily. However, the anion exchange membrane has requirements entirely different from those for the membrane for direct liquid fuel cell of the present invention. Accordingly, the production method thereof, etc. cannot be used as a reference.

In such a situation, the task of the present invention is to provide a membrane for direct liquid fuel cell which is high in methanol non-permeability and low in membrane resistance.

### Technical Solution

The present inventors made a study in order to achieve the above task. As a result, the present inventors succeeded in developing a hydrocarbon-based anion exchange membrane of quaternary ammonium type for fuel cell, which can achieve the above task. The success has led to the completion of the present invention.

The present invention lies in a membrane for direct liquid fuel cell comprising a porous film and a crosslinked hydrocarbon-based anion exchange resin filled in the pores of the porous film, having a quaternary ammonium group as an anion exchange group, which membrane is characterized by having a membrane thickness of 5 to 60 $\mu$m, a membrane resistance as measured in a wet condition of 40°C by an alternating impedance method, of 0.005 to 1.2 $\Omega \cdot cm^2$, and a methanol permeability at 25°C of 30 to 800 $g \cdot m^{-2} \cdot hr^{-1}$.

The above membrane for direct liquid fuel cell, made of a hydrocarbon-based anion exchange membrane of quaternary ammonium type can be produced by contacting, with a porous film having a thickness of 5 to 60 $\mu$m, a polymerizing composition comprising a polymerizing monomer having a halogenoalkyl group, a crosslinking polymerizing monomer, an epoxy group-containing compound and an effective amount of a polymerization initiator, to fill the polymerizing composition in the pores of the porous film, then polymerizing and curing the polymerizing composition, then converting the halogenoalkyl group into a quaternary ammonium group, and thereafter converting the counter ion of the quaternary ammonium group into a hydroxide ion.

**Advantageous Effects**

The membrane for direct liquid fuel cell, of the present invention is dense, low in methanol permeability, and small in membrane resistance. Therefore, a direct liquid fuel cell using this membrane can suppress the crossover of alcohol (fuel), is low in internal resistance and, therefore, can give a high output.

Since the membrane is extremely low in methanol permeability, in particular, its thickness can be made as small as 5 to 60 $\mu$m (further 7 to 20 $\mu$m). As a result, the membrane resistance can be made extremely low, making it possible to obtain a high cell output. Further, since a practically high cell output can be obtained with such a small thickness, a compact fuel cell can be obtained. Such a compact fuel cell enables its use in portable devices. Also, such a compact fuel cell, when used, for example, by lamination of a plurality of such fuel cells, makes small the size of laminated cells and makes easy the mounting on portable device.

**Brief Description of the Drawings**

Fig. 1 is a conceptual drawing showing the basic structure of a conventional solid polymer fuel cell.

**Explanation of the reference**

1a and 1b are each a cell partition wall; 2 is a fuel gas passage; 3 is an oxidant gas passage; 4 is a fuel diffusion electrode; 5 is an oxidant gas diffusion electrode; 6 is a solid polymer electrolyte (an anion exchange membrane); 7 is a fuel chamber; 8 is an oxidant chamber; and 10 is an assembly.

**Best Mode for Carrying Out the Invention**

The membrane for direct liquid fuel cell, of the present invention is an anion exchange membrane comprising a porous film (a base material) and a crosslinked hydrocarbon-based anion exchange resin filled in the pores of the base material. The anion exchange group bonded to the crosslinked hydrocarbon-based anion exchange resin (hereinafter, this anion exchange resin may be referred to simply as "hydrocarbon-based anion exchange resin of quaternary ammonium type") is a quaternary ammonium group. In the anion exchange membrane comprising a porous film and a hydrocarbon-based anion exchange resin of quaternary ammonium type filled in the porous film, the porous film functions as a reinforcing material.

The strength of an anion exchange membrane can be increased by increasing the thickness of the membrane. However, the increase in the thickness invites an increase in the electric resistance of the ion exchange membrane, which reduces the electricity generation efficiency of the fuel cell produced. The anion exchange membrane of the present invention can have a high physical strength without increasing the membrane thickness.

The porous film used in the present invention may be any known base material for ion exchange membrane. The base material may be made of a thermoplastic resin composition, a thermosetting resin composition, a mixture thereof, or the like. However, a polyolefin-based porous film is preferred because it is easy to produce, is superior in mechanical strength, chemical stability and chemical resistance, has good compatibility with the hydrocarbon-based anion exchange resin of quaternary ammonium type, and gives an anion exchange membrane of high surface smoothness.

As specific examples of the polyolefin-based porous film, there can be mentioned those produced from a polyolefin-based resin, e.g. a homopolymer or copolymer of an $\alpha$-olefin such as ethylene, propylene, 1-butene, 1-pentene, 1-hexene, 3-methyl-1-butene, 4-methyl-l-pentene, 5-methyl-1-heptene or the like. A porous film made particularly from a polyethylene or polypropylene resin is preferred, and a porous film made from a polyethylene resin is most preferred.

The polyolefin-based porous film may be produced by a method described in, for example, JP-A-1997-216964 or JP-A-2002-338721. Or, there may be used commercial products, for example, "Hipore" of Asahi Chemical Industry Co., ltd., "U-pore" of Ube Industries, Lt., "Setela" of Tonen Tapils, "Excelpor" of Nitto Denko Corporation and "Hilet" of Mitsui Chemicals, Inc.

The average pore diameter of the polyolefin-based porous film is generally 0.005 to 5.0 $\mu$m, preferably 0.01 to 1.0 $\mu$m, more preferably 0.015 to 0.4 $\mu$m, in order to make small the membrane resistance of the anion exchange membrane obtained and make large its mechanical strength. The porosity of the polyolefin-based porous film is generally 20 to 95%, preferably 30 to 80%, more preferably 30 to 50% for the same reasons as in the case of the average pore diameter.

The thickness of the porous film is 5 to 60 $\mu$m. By using a porous film of such small thickness, the anion exchange membrane obtained can have a small membrane resistance such as described later. The thickness is most preferably 7 to 20 $\mu$m when there are considered a small membrane resistance, low methanol permeability and a required mechanical strength. Incidentally, a porous membrane of such a small thickness (7 to 20 $\mu$m) is ordinarily difficult to procure as a fabric or the like.

Incidentally, in the present invention, the average pore diameter of the porous film is a value obtained by the measurement of half dry method based on ASTM F 316-86. The porosity of the porous film is a value calculated from the following expression using the volume ($V$ cm$^3$) and mass ($U$ g) of the porous film and the density ($X$ g·cm$^{-3}$) of the material of porous film.

$$\texttt{Porosity = [(V-U/X)/V]x100 (\%)}$$

The hydrocarbon-based anion exchange resin of quaternary ammonium type filled in the pores of the porous film is constituted by an ion exchange group (which is a quaternary ammonium group) and a skeletal portion (which is a crosslinked hydrocarbon-based polymer to which the ion exchange group is bonded chemically). Here, the hydrocarbon-based polymer refers to a polymer which contains substantially no carbon-fluorine bond and wherein the most part of the main chain and side chains constituting the polymer is constituted by carbon-carbon bonds. In this hydrocarbon-based polymer, there may be present, between the carbon-carbon bonds constituting the main chain and side chains, small amounts of other atoms (e.g. oxygen, nitrogen, silicon, sulfur, boron and phosphorus) constituting ether bond, ester bond, amide bond, siloxane bond, etc.

With respect to the atoms bonding to the main chain and side chains, all of them need not be hydrogen atoms and some (small amount) of them may be replaced by other atoms (e.g. chlorine, bromine, fluorine and iodine) or by substituent groups containing such other atoms. The amount of other atoms (other than carbon and hydrogen) is 40 mol % or less, preferably 10 mol % or less of the total atoms (excluding anion exchange group) constituting the resin.

The anion exchange group of the hydrocarbon-based anion exchange resin is a quaternary ammonium group. The quaternary ammonium group is superior in conduction of hydroxide ion. Further, the anion exchange group is preferred because the raw material required for production of the anion exchange membrane is easy to procure.

The membrane resistance of the hydrocarbon-based anion exchange membrane of quaternary ammonium type is 0.005 to 1.2 $\Omega$·cm$^2$, preferably 0.005 to 0.7 $\Omega$·cm$^2$, more preferably 0.01 to 0.4 $\Omega$·cm$^2$, as measured by an alternating current impedance method under a wet condition of 40°C. It is difficult to produce the anion exchange membrane so as to have a membrane resistance of less than 0.005 $\Omega$·cm$^2$. Meanwhile, when the membrane resistance is more than 1.2 $\Omega$·cm$^2$. no high cell output is obtainable. Incidentally, the wet condition of 40°C refers to a condition in which the anion exchange membrane is immersed in pure water.

In the present invention, the hydrocarbon-based anion exchange membrane of quaternary ammonium type, used as a membrane has a small membrane resistance and a low methanol permeability at 25°C, of 30 to 800 g·m$^{-2}$·hr$^{-1}$, preferably 30 to 600 g·m$^{-2}$·hr$^{-1}$. There has been no membrane for direct liquid fuel cell, made of such a hydrocarbon-based anion exchange membrane of quaternary ammonium type having a small membrane resistance and a low methanol permeability. A direct liquid fuel cell produced by using such a membrane can exhibit a high output.

Production of an anion exchange membrane having an even lower methanol permeability, i.e. a methanol permeability of less than 30 g·m$^{-2}$·hr$^{-1}$ is made possible only by making the membrane thickness excessively large or making the crosslinking degree of the anion exchange membrane excessively high. However, the anion exchange membrane obtained by such an approach is low in the conductivity of the hydroxide ion contained in the membrane. As a result, the fuel cell obtained is low in output and such a fuel cell has no practical usability.

Meanwhile, when the anion exchange membrane is allowed to have a thickness smaller than 5 $\mu$m or have an

excessively low crosslinking degree, the methanol permeability thereof tends to exceed 800 g·m$^{-2}$·hr$^{-1}$. A direct liquid fuel cell produced by using such an anion exchange membrane gives rise to a violent crossover phenomenon of liquid fuel (e.g. methanol). Consequently, the liquid fuel permeating through the anion exchange membrane reacts with oxygen or air on the oxidant gas diffusion electrode, inviting a rise in overvoltage. The rise in overvoltage leads to a reduction in the output of fuel cell, which is not preferred.

In the present invention, both the methanol permeability and the membrane resistance, of the hydrocarbon-based anion exchange membrane of quaternary ammonium type are controlled at low levels. In order to achieve such requirements, the anion exchange membrane is produced by a particular method described below.

That is, first, a polymerizing composition containing a halogenoalkyl group-containing, polymerizing monomer, a crosslinking polymerizing monomer, an epoxy group-containing compound and an effective amount of a polymerization initiator is contacted with a porous film having a thickness of 5 to 60 μm, to fill the polymerizing composition in the pores of the porous film. Then, the filled composition is polymerized and cured so that the resulting membrane has a thickness of 5 to 60 μm. Then, the halogenoalkyl group possessed by the resin obtained by curing of the polymerizing composition is converted into a quaternary ammonium group. Lastly, the counter ion of the quaternary ammonium group is converted into a hydroxide ion. Thereby can be obtained a membrane for direct liquid fuel cell, which is the anion exchange membrane of the present invention.

Hydrocarbon-based anion exchange membrane of quaternary ammonium type, used as a membrane for direct liquid fuel cell has conventionally been produced by the method described below.

First, a polymerizing composition containing a halogenoalkyl group-containing, polymerizing monomer, a crosslinking polymerizing monomer and an effective amount of a polymerization initiator is contacted with a porous film to fill the polymerizing composition in the pores of the porous film. Then, the filled composition is polymerized and cured. Then, the halogenoalkyl group possessed by the resin obtained by curing of the polymerizing composition is converted into a quaternary ammonium group. Lastly, the counter ion of the quaternary ammonium group is converted into a hydroxide ion. (see, for example, Example 1 of the Patent Literature 1.) However, the solid polymer electrolyte membrane produced by this conventional method is inferior in density and is unable to show a sufficient methanol non-permeability such as mentioned above. This is the same even when there is used, as the porous film, a porous film having a thickness of 5 to 60 μm.

In the method of the present invention for production of a membrane for fuel cell, an epoxy group-containing compound is used in the polymerizing composition; therefore, the anion exchange membrane obtained has good density. Further, since the membrane is small in thickness, the membrane resistance is kept low. Thus, the present membrane is highly balanced in methanol non-permeability and membrane resistance.

The reason for that the present membrane is low in membrane resistance and good in methanol non-permeability, is not clarified sufficiently. However, it is considered that the halogenoalkyl group-containing polymerizing monomer gives rise, during the polymerization, to partial decomposition of the halogenoalkyl group owing to the heat of polymerization and the action of the radical generated, and it is presumed that the chlorine gas or hydrogen chloride gas side-produced by the decomposition reduces the density of the ion exchange resin formed. In the production method of the present invention as well, the above-mentioned chlorine gas or hydrogen chloride gas is side-produced during the polymerization of the halogenoalkyl group-containing, polymerizing monomer; however, the gas is captured immediately by the epoxy group of the epoxy group-containing compound used; therefore, there is no generation of bubbles of the chlorine gas or the hydrogen chloride gas in the resin formed; as a result, it is presumed that there is no reduction in the density of membrane, caused by generation of bubbles.

Incidentally, for production of a hydrocarbon-based anion exchange membrane of quaternary ammonium type, there is known a method of using, in place of the halogenoalkyl group-containing polymerizing monomer, a polymerizing monomer (e.g. styrene) having a functional group into which a halogenoalkyl group can be introduced. In this method, first, a polymerizing monomer having a functional group into which a halogenoalkyl group can be introduced, is polymerized to obtain a resin; then, a halogenoalkyl group is introduced into the functional group of the resin; then, the halogenoalkyl group is converted into a quaternary ammonium group; thereafter, the counter ion of the quaternary ammonium group is converted to a hydroxide ion.

However, when a hydrocarbon-based anion exchange membrane of quaternary ammonium type is produced by the above method, the reaction for introduction of halogenoalkyl group begins from the surface of membrane-shaped resin, which makes difficult the uniform introduction of halogenoalkyl group in the thickness direction of membrane. As a result, the finally obtained, hydrocarbon-based anion exchange membrane of quaternary ammonium type tends to have an insufficient ion exchange capacity, inviting a high membrane resistance. When the reaction for halogenoalkyl group introduction is conducted violently in order to avoid the above problem, resin decomposition takes place, impairing the density of the anion exchange membrane obtained. As a result, the produced, hydrocarbon-based anion exchange membrane of quaternary ammonium type has insufficient methanol non-permeability.

For production of a hydrocarbon-based anion exchange membrane of quaternary ammonium type, there is other method of using a polymerizing monomer having a quaternary ammonium group introduced. In this method, first, there are mixed the above-mentioned polymerizing monomer, the above-mentioned crosslinking polymerizing monomer and an effective amount of the above-mentioned polymerization initiator; the resulting polymerizing composition is filled in the pores of a porous film; then, the filled polymerizing composition is polymerized and cured; thereafter, the counter ion of the quaternary ammonium group bonded to the cured resin is converted to a hydroxide ion to produce an anion exchange membrane.

However, when the above method is used for production of an anion exchange membrane, the polymerizing monomer having a quaternary ammonium group introduced is low in polymerizability and accordingly the membrane obtained is low in density ordinarily. Therefore, the membrane is unable to exhibit sufficient methanol non-permeability.

When the above-mentioned epoxy group-containing compound is contained in the polymerizing composition, there is obtained an anion exchange membrane which generally has a small methanol permeability and a small membrane resistance. This function of the epoxy group-containing compound appears fundamentally even when the proportions of the individual components constituting the polymerizing composition or the porosity of the porous film has been changed. However, when there is produced a membrane for direct liquid fuel cell small in both methanol non-permeability and membrane resistance, the formulation of the polymerizing composition used is restricted to the following. That is, the polymerizing composition used contains 100 mass parts of a halogenoalkyl group-containing polymerizing monomer, 1 to 20 mass parts, preferably 2 to 7 mass parts of a crosslinking polymerizing monomer, 1 to 12 mass parts, preferably 3 to 8 mass parts of an epoxy group-containing compound, and an effective amount of a polymerization initiator.

In the polymerizing composition, the proportion of the epoxy group-containing compound is extremely important. When the proportion of the epoxy group-containing compound is less than 1 mass part, the membrane obtained has a low density and a high methanol permeability. Meanwhile, when the proportion of the epoxy group-containing compound is more than 12 mass parts, the excess amount of the compound bleeds out from the anion exchange resin obtained, during the use of the obtained resin as a membrane for fuel cell. As a result, the anion exchange membrane comes to have an insufficient density and a high methanol permeability.

In producing the anion exchange membrane used in the present invention, the proportion of the crosslinking polymerizing monomer in the polymerizing composition is important as well. When the proportion of the crosslinking polymerizing monomer is less than 1 mass part, the anion exchange membrane obtained has a low density, making it impossible to obtain an anion exchange membrane having a sufficiently low methanol non-permeability. Meanwhile, when the proportion of the crosslinking polymerizing monomer is more than 20 mass parts, the membrane obtained has too high a density, making it impossible to obtain an anion exchange membrane of the present invention having a small membrane resistance.

In the production method of the anion exchange membrane, the halogenoalkyl group-containing polymerizing monomer used may be any known compound. The halogenoalkyl group is a halogenoalkyl group in which the alkyl group has 1 to 8 carbon atoms, preferably 1 to 4 carbon atoms, more preferably 1 carbon atom, such as chloromethyl group, bromomethyl group, iodomethyl group, chloroethyl group, bromoethyl group, iodoethyl group, chloropropyl group, bromopropyl group, iodopropyl group, chlorobutyl group, bromobutyl group, iodobutyl group, chloropentyl group, bromopentyl group, iodopentyl group, chlorohexyl group, bromohexyl group, iodohexyl group or the like.

As specific examples of the halogenoalkyl group-containing polymerizing monomer, there can be mentioned chloromethylstyrene, bromomethylstyrene, iodomethylstyrene, chloroethylstyrene, bromoethylstyrene, iodoethylstyrene, chloropropylstyrene, bromopropylstyrene, iodopropylstyrene, chlorobutylstyrene, bromobutylstyrene, iodobutylstyrene, chloropentylstyrene, bromopentylstyrene, iodopentylstyrene, chlorohexylstyrene, bromohexylstyrene and iodohexylstyrene. Of these halogenoalkyl group-containing polymerizing monomers, particularly preferred are chloromethylstyrene, bromomethylstyrene, iodomethylstyrene, chloroethylstyrene, bromoethylstyrene, iodoethylstyrene, chloropropylstyrene, bromopropylstyrene, iodopropylstyrene, chlorobutylstyrene, bromobutylstyrene and iodobutylstyrene.

As to the crosslinking polymerizing monomer, there is no particular restriction. However, there can be mentioned, for example, divinyl compounds such as divinylbenzenes, divinylsulfone, butadiene, chloroprene, divinylbiphenyl, trivinylbenzenes, divinylnaphthalene, diallylamine, divinylpyridine and the like.

As the epoxy group-containing compound (epoxy compound), there can be used any known compound having one or more epoxy groups in the molecule. As the mono-epoxy compound, there can be mentioned epoxidized $\alpha$-olefins (e.g. propylene oxide, ethylene oxide and epichlorohydrin) and their derivatives; and mono-glycidyl ethers (e.g. butyl glycidyl ether, phenyl glycidyl ether, n-octyl glycidyl ether, ethylene glycol glycidyl ether and propylene glycol glycidyl ether), terpene oxide, styrene oxide, and their derivatives. As the di-epoxy compound, there can be mentioned di-glycidyl ethers (e.g. trimethylolpropane di-glycidyl ether, ethylene glycol di-glycidyl ether and propylene glycol di-glycidyl ether); di-glycidyl ethers of polyoxyalkylene compounds (e.g. polyethylene glycol di-glycidyl ether and polypropylene glycol di-glycidyl ether); and their derivatives. As the tri- or higher functional epoxy compound, there can be mentioned epoxidized vegetable oils (e.g. epoxidized soybean oil and epoxidized linseed oil) and their derivatives, poly-epoxidized polymers, etc. These epoxy compounds can be obtained by the method described in JP-A-1999-158486. They can also be obtained as commercial products such as "ADEKA CIZER" of ADEKA Corporation, "KAPOX" of Kao Corporation, "EPOLIGHT" of Kyoeisha Chemical Co., Ltd., "CYCLOMER" and "DAIMAC" of Daicel Chemical Industries, Ltd., and "DENACOL" of Nagase Chemtex Corporation.

Of the above-mentioned epoxy compounds, preferred are those compounds having, in the molecule, two or more epoxy groups so that the hydrogen chloride gas or the like can be captured sufficiently even when they are used in the polymerizing composition in a small amount. Further, there are preferred epoxy compounds which have no alicyclic functional group or no aromatic ring and are highly hydrophilic so that they can contact with hydrophilic hydrogen chloride gas and capture the gas sufficiently. Of these compounds, preferred are those epoxy compounds in which two or more glycidyl groups are introduced into the terminal or middle of the aliphatic hydrocarbon chain or aliphatic polyether chain. With an epoxy compound of a small molecular weight, the vaporization thereof is high and the membrane obtained may have a low density. Meanwhile, with an epoxy compound of too large a molecular weight, the polymerizing composition obtained has a high viscosity, which invites the insufficient filling of the composition into the pores of the porous film and the excessive adhesion of the composition on surface parts of the porous film; thereby, the anion exchange membrane obtained may have inferior appearance and inferior smoothness. Therefore, the molecular weight of the epoxy compound is preferably 100 to 3,000, more preferably 100 to 1,000.

As the polymerization initiator, any known polymerization initiator may be used. As examples of the polymerization initiator, there can be mentioned organic peroxides such as octanoyl peroxide, lauryl peroxide, tert-butyl peroxy-2-ethylhexanoate, benzoyl peroxide, tert-butyl peroxyisobutylate, tert-butyl peroxylaurate, tert-hexyl peroxybenzoate and di-tert-butyl peroxide.

In the polymerizing composition, the proportion of the polymerization initiator can be selected in a wide range as long as the proportion is an amount effective for the achievement of the intended polymerization reaction. The radical polymerization initiator is used generally in an amount of 0.1 to 20 mass parts, preferably 0.5 to 10 mass parts per 100 mass parts of the halogenoalkyl group-containing polymerizing monomer.

The polymerizing composition may as necessary contain other components as long as their use does not impair the effect of the present invention. In particular, other monomer copolymerizable with the above-mentioned halogenoalkyl group-containing polymerizing monomer or crosslinking polymerizing monomer, or a plasticizer may be added as necessary. As such other monomer, there can be mentioned, for example, styrene, acrylonitrile, methylstyrene, acrolein, methyl vinyl ketone and vinylbiphenyl. The proportion thereof is 100 mass parts or less, preferably 80 mass parts or less, more preferably 30 mass parts or less per 100 mass parts of the halogenoalkyl group-containing polymerizing monomer.

As the plasticizer, there can be mentioned, for example, dibutyl phthalate, dioctyl phthalate, dimethyl isophthalate, dibutyl adipate, triethyl citrate, acetyl tributyl citrate and dibutyl sebacate. The proportion thereof is 50 mass parts or less, preferably 30 mass parts or less per 100 mass parts of the halogenoalkyl group-containing polymerizing monomer.

The polymerizing composition having the above formulation is filled in the pores of the porous film and then polymerized.

As the porous film, there is effectively used the above-mentioned polyolefin-based porous film having an average pore diameter of 0.005 to 5.0 $\mu$m, a porosity of 20 to 95% and a thickness of 5 to 60 $\mu$m. A particularly preferred polyolefin-based porous film has an average pore diameter of 0.01 to 1.0 $\mu$m, a porosity of 30 to 80 and a thickness of 5 to 60 $\mu$m.

It is preferred to use specifically a porous film having an average pore diameter of 0.015 to 0.4, a porosity of 30 to 50 and a thickness of 5 to 60 $\mu$m, and a polymerizing composition containing 100 mass parts of a halogenoalkyl group-containing polymerizing monomer, 1 to 20 mass parts of a crosslinking polymerizing monomer, 1 to 12 mass parts of an epoxy group-containing compound, to produce an anion exchange membrane. In this case, the anion exchange membrane obtained has a particularly low membrane resistance of 0.005 to 0.7 $O \cdot cmg \cdot m^{-2} \cdot hr^{-1}$ and a methanol permeability of 150 to 800 $g \cdot m^{-2} \cdot hr^{-1}$.

It is more preferred to use a porous film having a smaller thickness of 7 to 20 $\mu$m and a polymerizing composition containing 100 mass parts of a halogenoalkyl group-containing polymerizing monomer, 2 to 7 mass parts of a crosslinking polymerizing polymer and 3 to 8 mass parts of an epoxy group-containing compound, to produce an anion exchange membrane. In this case, the anion exchange membrane obtained has a still extremely low membrane resistance of 0.01 to 0.4 $O \cdot cm^2$ and a lower methanol permeability of 200 to 600 $g \cdot m^{-2} \cdot hr^{-1}$. This anion exchange membrane is highly balanced in small membrane resistance and low methanol permeability.

The membrane for fuel cell, made of the above anion exchange membrane having the above-mentioned properties is very useful in view of the high output, compactness, etc. of the fuel cell produced therefrom.

As to the manner of filling the monomer composition into the porous film, there is no particular restriction. The filling can be conducted, for example, by coating or spraying the monomer composition on the porous film, or by immersing the porous film in the monomer composition.

As the method for polymerizing the monomer composition filled in the pores of the porous film, there is generally preferred a method of sandwiching the film between other films (e.g. polyester films) and elevating their temperatures from room temperature to 50 to 150°C at a pressure of 0.01 to 1 MPa. The heating is preferably conducted by maintaining the maximum temperature attained, for 10 minutes to 10 hours. This polymerization condition differs depending upon the kind of the polymerization initiator used, the formulation of the monomer composition used, etc., is not particularly restricted, and may be selected appropriately.

By the above polymerization, a membrane-shaped material comprising a porous film and a resin contained in the film is obtained, wherein the resin is obtained by curing of the above-mentioned monomer composition. The resin in the membrane-shaped material has a halogenoalkyl group derived from the above-mentioned, halogenoalkyl group-containing polymerizing monomer. The halogenoalkyl group is converted to a quaternary ammonium group, whereby an anion exchange membrane is derived. The conversion to a quaternary ammonium group is conducted by a usual method. The method includes a method of immersing the membrane-shaped material obtained by the polymerization, in a solution containing a tertiary amine (e.g. trimethylamine, triethylamine or dimethylaminoethanol), at 5 to 50°C for 10 hours or longer.

The anion exchange membrane produced by the above method, ordinarily has a quaternary ammonium group whose counter ion is halogeno ion. Since the anion exchange membrane is used as a fuel cell membrane of hydroxide ion conduction type, it is preferred that the counter ion of the quaternary ammonium group is converted to hydroxide ion. By this ion conversion, a fuel cell membrane of high output can be obtained. Incidentally, the anion exchange membrane converted to hydroxide ion type, of the present invention, when stored in the air or used in a fuel cell supplying the air, absorbs the carbon dioxide contained in the air, and at least part of the hydroxide ion may be converted to carbonate ion or bicarbonate ion. Thus, the hydrocarbon-based anion exchange membrane of quaternary ammonium type, used in the present invention may contain, as the counter ion, carbonate ion or bicarbonate ion.

The conversion of the counter ion of quaternary ammonium group to hydroxide ion is conducted by a specific method. Ordinarily, the conversion is conducted by immersing the anion exchange membrane in an aqueous alkali hydroxide solution (e.g. aqueous sodium hydroxide solution or aqueous potassium hydroxide solution). There is no particular restriction as to the concentration of the aqueous alkali hydroxide solution. Ordinarily, the concentration is 0.1 to 2 mol·L$^{-1}$, the immersion temperature is 5 to 60°C, and the immersion time is 0.5 to 24 hours.

By the above production method can be obtained a hydrocarbon-based anion exchange membrane of quaternary ammonium type controlled at low levels in both methanol permeability and membrane resistance. Besides, the membrane has a high mechanical strength. The high mechanical strength is related to the high membrane density. The anion exchange membrane, even when produced using a thin porous film of 5 $\mu$m, ordinarily has a burst strength of 0.08 MPa or more. Having a high burst strength, the anion exchange membrane, when used in a fuel cell, hardly produces cracks and can suppress the generation of pin holes, caused by sticking, into the membrane, of the fiber of the carbon paper ordinarily used as a diffusion electrode. The burst strength can be increased to 0.1 MPa or more by making larger the thickness of the porous film within an allowable limit, or by increasing the amount of the crosslinking polymerizing monomer used, in an appropriate range, and even an anion exchange membrane having a burst strength of as high as 1.0 MPa can be produced.

The anion exchange capacity of the hydrocarbon-based anion exchange membrane of quaternary ammonium type, obtained by the above-mentioned production method is ordinarily 0.2 to 3 mmol·g$^{-1}$, preferably 0.5 to 2.5 mmol·g$^{-1}$. The water content thereof is 7 mass % or more, preferably about 10 to 90 mass %, at 25°C. Such a water content hardly causes a reduction in conductivity of hydroxide ion by ordinary drying.

The hydrocarbon-based anion exchange membrane of quaternary ammonium type, obtained by the above-mentioned production method is as necessary subjected to washing, cutting, etc. and becomes a membrane for direct liquid fuel cell.

The direct liquid fuel cell in which the membrane of the present invention is used, generally has a basic structure shown in Fig. 1. The present membrane can also be used in a direct liquid fuel cell having other known structure. As the liquid fuel, methanol is most general and, with this liquid fuel, the advantage of the present invention is exhibited most strikingly. The same excellent advantage is exhibited with other liquid fuels such as ethanol, ethylene glycol, dimethyl ether, hydrazine and the like.


Examples


The present invention is described more specifically below by way of Examples. However, the present invention is in no way restricted to these Examples.

Incidentally, the anion exchange capacity, water content, membrane resistance, methanol permeability, mechanical strength, membrane thickness and fuel cell output voltage, used for the property evaluation of fuel cell membrane in Examples and Comparative Examples, were measured by the following methods.


1) Anion exchange capacity and water content


An ion exchange membrane was immersed in an aqueous solution containing 0.5 mol·L$^{-1}$ of NaCl, for 10 hours or more, to convert the membrane to a chloride ion type. Then, the ion exchange membrane was converted to a nitrate ion type using an aqueous solution containing 0.2 mol·L$^{-1}$ of NaNO$_3$. The liberated chloride ion was quantitatively determined using an aqueous silver nitrate solution by the use of a potentiometric titration apparatus (COMTITE-900 produced by Hiranuma Sangyo K.K.) (A mol). Next, the same ion exchange membrane was immersed in an aqueous solution containing 0.5 mol·L$^{-1}$ of NaCl, at 25°C for 4 hours or more, and the resulting ion exchange membrane was washed with deionized water thoroughly. Then, the water remaining on the surface of the ion exchange membrane was wiped off with a tissue paper and measured for wet weight (W g). Then, the ion exchange membrane was vacuum-dried at 60°C for 5 hours and measured for mass (D g). Based on these measurement data, the ion exchange capacity and water content were determined by the following expressions.

$$\text{Ion exchange capacity} = A \times 1000/D \ (\text{mmol·g}^{-1} \ \text{dry weight})$$

$$\text{Water content} = 100 \times (W-D)/D \ (\%)$$

2) Average pore diameter of porous film

Measured by the half-dry method based on ASTM F 316-86.

3) Porosity of porous film

A porous film was measured for volume (V cm$^3$) and mass (U g). Using the data, the porosity of the porous film was calculated using the following expression, by taking the density of the polyethylene (which was a base material of the porous film) at 0.9 g·cm$^{-3}$.

$$\text{Porosity} = [(V-U/0.9)/V] \times 100 \ (\%)$$

5) Membrane resistance

Five platinum wires each having a width of 0.3 mm were arranged apart in parallel on an insulation substrate. A rectangular, hydrocarbon-based anion exchange membrane of quaternary ammonium type was pushed against the five platinum wires on the insulation substrate, to prepare a sample for measurement. The rectangular ion exchange membrane had a width of 2.0 cm, had been previously immersed in pure water of 40°C, and was used for measurement with the water droplets remaining on the membrane surface, that is, in a wet state. The sample was transferred into a thermo-hygrostat of 40°C and 90% RH, and an AC of 1 kHz was applied between the platinum wires to measure AC impedances by changing the distance between platinum wires in a range of 0.5 to 2.0 cm.

There was a contact resistance between the platinum wires and the membrane. However, the influence was removed by calculating the specific resistance of the membrane from the distance between platinum wires and the gradient of resistance. A good linear relationship was obtained between the distance between platinum wires and the resistance measured. The resistance of the membrane in a 40°C wet state was calculated from the gradient of resistance and the membrane thickness, using the following expression. Incidentally, the membrane thickness was measured using a micrometer in the wet state.

$$R = 2.0 \times L^2 \times S$$

R: membrane resistance (Ω-cm$^2$)
L: membrane thickness (cm)
S: resistance gradient between poles (Ω·cm$^{-1}$)

6) Methanol permeability

An anion exchange membrane was placed in a fuel cell (electrolyte membrane area: 5 cm$^2$). A 30 mass % aqueous methanol solution was fed into the fuel chamber using a pump for liquid chromatography, and argon gas was fed into the oxidant chamber (which was at the opposite side of the membrane) at a rate of 300 ml·min$^{-1}$. The measurement was conducted in a thermostat of 25°C. The argon gas discharged from the oxidant chamber was sent to a gas sampler and collected thereby. The methanol concentration in the argon gas collected by the gas sampler was quantitatively determined by gas chromatography, to determine the methanol amount which permeated through the ion exchange membrane.

7) Output voltage of fuel cell

A chloromethylstyrene-styrene copolymer having a molecular weight of 30,000 and a styrene content of 60 mass % was quaternized with trimethylamine. The quaternized copolymer was then suspended in a large excess of a 0.5 mol·L$^{-1}$ aqueous NaOH solution to convert to a hydroxide ion type. The resulting copolymer was dissolved in tetrahydrofuran to prepare a tetrahydrofuran solution of an anion exchange resin (resin concentration: 5 mass %). This tetrahydrofuran solution was mixed with a carbon black having a platinum-ruthenium alloy catalyst (ruthenium: 50 mol %) loaded thereon. The mixed solution was coated on a carbon paper. The carbon paper had been subjected to a water repellency treatment with a polytetrafluoroethylene and had a thickness of 100 $\mu$m and a porosity of 80%. The coating amount of the catalyst was 2 mg·cm$^{-2}$. Then, the catalyst-coated carbon paper was vacuum-dried at 80°C for 4 hours to prepare a fuel diffusion electrode and an oxidant gas diffusion electrode.

Next, the fuel diffusion electrode was placed on one side of an anion exchange membrane for measurement and the oxidant gas diffusion electrode was placed on other side of the anion exchange membrane. The laminate was hot-pressed for 100 seconds at 100°C at 5 MPa and then allowed to stand at room temperature for 2 minutes to obtain an assembly for fuel cell. The assembly was placed in a fuel cell having a structure shown in Fig. 1. The fuel cell was maintained at 50°C; a 10 mass % aqueous methanol solution was fed to the fuel electrode side and an oxygen of atmospheric pressure was fed to the oxidant electrode side at a rate of 200 ml·min$^{-1}$; and a electricity generation test was conducted. Cell terminal voltages when the current densities were 0 A·cm$^{-2}$ and 0.1 A·cm$^{-2}$, were measured.

(Examples 1 to 11)

Monomers, etc. were mixed in accordance with the formulations shown in Table 1, to obtain individual polymerizing compositions. 400 g of each polymerizing composition obtained was placed in a 500-ml glass container. Therein was immersed each of porous films (A to H, each 20 cm x 20 cm) shown in Table 1.

Successively, the porous film was taken out from the polymerizing composition and was covered at the both sides with polyester films of 100 $\mu$m used as a peelable material. Then, thermal polymerization was conducted at 80°C for 5 hours at a nitrogen pressure of 0.3 MPa.

The resulting membrane-shaped material was imersed in an aqueous solution containing 6 mass % of trimethylamine and 25 mass % of acetone, at room temperature for 16 hours. Then, the membrane-shaped material was immersed in a large excess of a 0.5 mol·L$^{-1}$ aqueous NaOH solution to convert the counter ion from chloride ion to hydroxide ion. Thereafter, the membrane-shaped material was washed with deionized water to obtain each membrane for fuel cell.

Each membrane for fuel cell was measured for anion exchange capacity, water content, membrane resistance, membrane thickness, methanol permeability and output voltage of fuel cell. The results are shown in Table 2.

(Comparative Example 1)

A membrane for fuel cell was obtained in the same operation as used in Example 1 except that no epoxy compound was used in the polymerizing composition of Example 1.

The membrane for fuel cell was measured for cation exchange capacity, water content, membrane resistance, membrane thickness, methanol permeability and output voltage of fuel cell. The results are shown in Table 2.

(Comparative Example 2)

A membrane for fuel cell was obtained in the same operation as used in Example 6 except that no epoxy compound was used in the polymerizing composition of Example 6.

The membrane for fuel cell was measured for cation exchange capacity, water content, membrane resistance, membrane thickness, methanol permeability and output voltage of fuel cell. The results are shown in Table 2.

(Comparative Example 3)

A membrane for fuel cell was obtained in the same operation as used in Example 1 except that a polyvinyl chloride-made fabric of 100 $\mu$m in thickness was used as a base material and a polymerizing composition shown in Table 1 was used.

The membrane for fuel cell was measured for cation exchange capacity, water content, membrane resistance, membrane thickness, methanol permeability and output voltage of fuel cell. The results are shown in Table 2.

[Table 1]

Table 1

| Example No. | Porous membrane[1] | Epoxy compound[2] | Formulation (mass parts) | | | | |
|---|---|---|---|---|---|---|---|
| | | | CMS[3] | DVB[4] | PO[5] | Epoxy compound | NBR[6] |
| 1 | A | a | 100 | 5 | 5 | 5 | - |
| 2 | B | a | 100 | 5 | 5 | 5 | - |
| 3 | C | a | 100 | 3 | 5 | 5 | - |
| 4 | C | a | 100 | 7 | 5 | 5 | - |
| 5 | D | a | 100 | 2 | 5 | 5 | - |
| 6 | E | a | 100 | 10 | 5 | 5 | - |
| 7 | E | a | 100 | 18 | 5 | 5 | - |
| 8 | F | a | 100 | 5 | 5 | 5 | - |
| 9 | G | a | 100 | 2 | 5 | 5 | - |
| 10 | H | a | 100 | 10 | 5 | 5 | - |
| 11 | A | b | 100 | 5 | 5 | 5 | - |
| Comp. Example 1 | A | - | 100 | 5 | 5 | - | - |
| Comp. Example 2 | E | - | 100 | 10 | 5 | - | - |
| Comp. Example 3 | I | a | 100 | 7 | 5 | 5 | 5 |

1) Porous membrane A: A polyethylene-made porous film, thickness: 12 $\mu$m, average pore diameter: 0.03 $\mu$m, porosity: 40%

B: A polyethylene-made porous film, thickness: 9 $\mu$m, average pore diameter: 0.03 $\mu$m, porosity: 35%

C: A polyethylene-made porous film, thickness: 16 $\mu$m, average pore diameter: 0.03 $\mu$m, porosity: 40%

D: A polyethylene-made porous film, thickness: 25 $\mu$m, average pore diameter: 0.03 $\mu$m, porosity: 37%

E: A polyethylene-made porous film, thickness: 37 $\mu$m, average pore diameter: 0.03 $\mu$m, porosity: 45%

F: A polyethylene-made porous film, thickness 36 $\mu$m, average pore diameter: 0.3 $\mu$m, porosity: 42%

G: A polyethylene-made porous film, thickness: 55 $\mu$m, average pore diameter: 0.5 $\mu$m, porosity: 62%

H: A polyethylene-made porous film, thickness 100 $\mu$m, average pore diameter: 0.5 $\mu$m, porosity: 55%

I: A polyvinyl chloride-made fabric, thickness: 100 $\mu$m

2) Epoxy compound

a: Epolite 40E (ethylene glycol diglycidyl ether, molecular weight: 174), a product of Kyoeisha Chemical Co., Ltd.

b: Adeka Sizer D178 (epoxidized linseed oil, molecular weight: 365), a product of ADEKA 3) CMS: p-chloromethylstyrene 4) DVB: divinylbenzene 5) PO: tert-butyl peroxyethylhexanoate 6) NBR: nitrile butadiene rubber

[Table 2]

Table 2

| Example No. | Membrane thickness ($\mu$m) | Ion exchange capacity (mmol·g$^{-1}$) | Water content (mass %) | Membrane resistance ($\Omega$·cm$^2$) | Methanol permeability (g·m$^{-2}$·hr$^{-1}$) | Fuel cell output (V) | |
|---|---|---|---|---|---|---|---|
| | | | | | | 0 A·m$^{-2}$ | 0.1 A·m$^{-2}$ |
| 1 | 13 | 1.8 | 28 | 0.11 | 490 | 0.77 | 0.22 |

(continued)

| Example No. | Membrane thickness ($\mu$m) | Ion exchange capacity (mmol·g$^{-1}$) | Water content (mass %) | Membrane resistance ($\Omega$·cm$^2$) | Methanol permeability (g·m$^{-2}$·hr$^{-1}$) | Fuel cell output (V) | |
|---|---|---|---|---|---|---|---|
| | | | | | | 0 A·m$^{-2}$ | 0.1 A·m$^{-2}$ |
| 2 | 9 | 1.7 | 23 | 0.10 | 580 | 0.76 | 0.23 |
| 3 | 17 | 1.8 | 27 | 0.12 | 520 | 0.77 | 0.26 |
| 4 | 17 | 1.6 | 20 | 0.33 | 250 | 0.78 | 0.20 |
| 5 | 28 | 2.1 | 53 | 0.06 | 690 | 0.75 | 0.22 |
| 6 | 39 | 1.8 | 30 | 0.42 | 350 | 0.77 | 0.25 |
| 7 | 38 | 1.6 | 10 | 1.16 | 190 | 0.65 | 0.18 |
| 8 | 40 | 2.0 | 43 | 0.30 | 650 | 0.69 | 0.20 |
| 9 | 57 | 2.8 | 51 | 0.10 | 710 | 0.68 | 0.26 |
| 10 | 104 | 2.0 | 37 | 0.58 | 180 | 0.75 | 0.28 |
| 11 | 13 | 1.8 | 26 | 0.12 | 470 | 0.77 | 0.21 |
| Comp. Example 1 | 17 | 1.2 | 15 | 0.09 | 1140 | 0.52 | 0.09 |
| Comp. Example 2 | 39 | 1.5 | 25 | 0.25 | 940 | 0.54 | 0.04 |
| Comp. Example 3 | 180 | 1.9 | 36 | 1.65 | 100 | 0.42 | 0 |

## Claims

1. A membrane for direct liquid fuel cell comprising a porous film and a crosslinked hydrocarbon-based anion exchange resin filled in the pores of the porous film, in which the anion exchange resin has a quaternary ammonium group as an anion exchange group, wherein the membrane is **characterized by** having a membrane thickness of 5 to 60 $\mu$m, a membrane resistance as measured in a wet condition of 40°C by an alternating impedance method, of 0.005 to 1.2 $\Omega$·cm$^2$, and a methanol permeability at 25°C of 30 to 800 g·m$^{-2}$·hr$^{-1}$.

2. The membrane for direct liquid fuel cell according to Claim 1, wherein the membrane resistance measured in a wet condition of 40°C by an alternating impedance method is 0.005 to 0.7 $\Omega$·cm$^2$ and the methanol permeability at 25°C is 150 to 800 g·m$^{-2}$·hr$^{-1}$.

3. The membrane for direct liquid fuel cell according to Claim 1, wherein the membrane thickness is 7 to 20 $\mu$m, the membrane resistance measured in a wet condition of 40°C by an alternating impedance method is 0.01 to 0.4 $\Omega$·cm$^2$ and the methanol permeability at 25°C is 200 to 600 g·m$^{-2}$·hr$^{-1}$.

4. A method for producing a membrane for direct liquid fuel cell, **characterized by** contacting, with a porous film having a thickness of 5 to 60 $\mu$m, a polymerizing composition comprising 100 mass parts of a polymerizing monomer having a halogenoalkyl group, 1 to 20 mass parts of a crosslinking polymerizing monomer, 1 to 12 mass parts of an epoxy group-containing compound and an effective amount of a polymerization initiator, to fill the polymerizing composition in the pores of the porous film, then polymerizing and curing the polymerizing composition, then converting the halogenoalkyl group into a quaternary ammonium group, and thereafter converting the counter ion of the quaternary ammonium group into a hydroxide ion.

Fig. 1    <u>10</u>

<div align="center">**INTERNATIONAL SEARCH REPORT**</div>

| International application No. |
| --- |
| PCT/JP2008/055898 |

A. CLASSIFICATION OF SUBJECT MATTER
*H01M8/02*(2006.01)i, *H01B1/06*(2006.01)i, *H01B13/00*(2006.01)i, *H01M8/10*
(2006.01)i

According to International Patent Classification (IPC) or to both national classification and IPC

B. FIELDS SEARCHED

Minimum documentation searched (classification system followed by classification symbols)
H01M8/02, H01B1/06, H01B13/00, H01M8/10

Documentation searched other than minimum documentation to the extent that such documents are included in the fields searched
Jitsuyo Shinan Koho          1922-1996   Jitsuyo Shinan Toroku Koho   1996-2008
Kokai Jitsuyo Shinan Koho    1971-2008   Toroku Jitsuyo Shinan Koho   1994-2008

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 2007-42617 A  (Tokuyama Corp.),<br>15 February, 2007 (15.02.07),<br>Claims; Par. Nos. [0044] to [0062], [0104] to [0106]<br>(Family: none) | 1-4 |
| X | WO 2007/004716 A1  (Tokuyama Corp.),<br>11 January, 2007 (11.01.07),<br>Claims; page 20, line 11 to page 39, line 7<br>& JP 2007-123259 A<br>Claims; Par. Nos. [0059] to [0125] | 1-4 |
| X | JP 2004-217921 A  (Tokuyama Corp.),<br>05 August, 2004 (05.08.04),<br>Claims; Par. Nos. [0040], [0049]<br>& US 2004/0137297 A1<br>Claims; Par. Nos. [0065], [0075] | 1-3 |

☐ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 21 May, 2008 (21.05.08) | 03 June, 2008 (03.06.08) |

| Name and mailing address of the ISA/<br>Japanese Patent Office | Authorized officer |
| --- | --- |
| Facsimile No. | Telephone No. |

Form PCT/ISA/210 (second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11135137 A
- JP 11273695 A
- JP 2000331693 A
- JP 2005032536 A
- JP 9216964 A
- JP 2002338721 A
- JP 11158486 A